# EUROPÄISCHE PATENTSCHRIFT

(11) **EP 0 391 294 B1**
(45) Veröffentlichungstag und Bekanntmachung des Hinweises auf die Patenterteilung: **28.07.1993**
(21) Anmeldenummer: 90106253.9
(22) Anmeldetag: 02.04.1990
(51) Int. Cl.: C23C 28/00

(54) **Beschichtung von Kolbenstangen hydraulischer Zylinder aus Stahl**
Coating piston rods of hydraulic steel cylinders
Revêtement de pistons de cylindres hydrauliques en acier

(30) Priorität: 03.04.1989 DE 3910725
(43) Veröffentlichungstag der Anmeldung: 10.10.1990
(73) Patentinhaber: HYDRAUDYNE CYLINDERS B.V., NL-5280 AA Boxtel (NL)
(72) Erfinder: Van der Heyden, Marius, NL-5283 KT Boxtel (NL)
(74) Vertreter: Hauck, Hans, Dipl.-Ing.

(56) Entgegenhaltungen:
- DD-C- 147 139
- DE-A- 3 206 432
- DE-A- 3 719 077
- FR-A- 2 103 656
- US-A- 4 106 782
- PATENT ABSTRACTS OF JAPAN, Band 12, Nr. 446 (C-546)[3292], 24 November 1988; Seite 6 C 546#
- PATENT ABSTRACTS OF JAPAN, Band 9, Nr. 146 (M-389)[1869], 21 Juni 1985#

## Beschreibung

Die Erfindung betrifft eine Beschichtung aus Stahl von Kolbenstangen hydraulischer Zylinder gemäß dem Oberbegriff des Patentanspruchs 1.

Bei Kolbenstangen hydraulischer Zylinder, Armaturen, Ventilen, Wellen, hydraulischen Anlagen an Schleusen, Brücken, im Off-shore-Bereich und an Bord von Schiffen verursacht die aggressive Umgebung Korrosion und Verschleiß und verkürzt die Lebensdauer wesentlich. Ein Korrosionsschutz ist somit für alle Bauteile zwingend, die bewegungsfähig bleiben sollen und die aus normalem Stahl, nämlich Kohlenstoffstahl hergestellt sind.

Üblicherweise sind solche Bauteile wie Kolbenstangen mit einer metallischen Schicht aus Chrom und/oder Nickelchrom versehen. Diese metallische Schicht ist gegen chemische Einflüsse anfällig, die zum sogenannten Lochfraß führen, bei dem die Chromschicht von außen angefressen wird, wodurch das Bauteil nach einiger Zeit unbrauchbar wird.

Bauteile aus Niro-Stahl sind zur Verschleißminderung mit einer Chromschicht versehen und sind naturgemäß sehr teuer.

Hieraus ergibt sich die der Erfindung zugrundeliegende Aufgabe, für die genannten Bauteile aus Stahl eine korrosionsbeständige Beschichtung zu entwickeln.

Diese Aufgabe ist erfindungsgemäß durch die Merkmale des Patentanspruchs 1 gelöst.

Die erfindungsgemäße keramische Beschichtung besitzt einen auffälligen Widerstand gegen chemische Beschädigung sowie auch eine sehr hohe Verschleißfestigkeit bei mechanischen Einflüssen durch Staub, Schmutz, Grus, Sand und dgl. Andererseits ist die Auswahl der Werkstoffe für die keramische Beschichtung so getroffen, daß der Verschleiß am Lager, z.B. an der Zylinderführung einer Kolbenstange nicht unzulässig hoch wird. Erfindungsgemäß ist die keramische Beschichtung so aufgebaut, daß sie Korrosionsbeständigkeit und Härte so miteinander vereint, daß die Lebensdauer einen möglichst hohen Wert erreicht und daß die Schicht gut zu bearbeiten ist.

Eine solche Optimierung läßt sich mit einer keramiscchen Beschichtung aus Al₂O₃ und TiO₂ erreichen, wobei der Anteil an Titanoxid mindestens 10% beträgt. Die Schichtdicke hat eine Größenordnung von etwa 100µm bis beispielsweise 300µm, um die keramische Schicht weitgehend zu schließen und die ihr von Hause aus anhaftende Porosität zu vermeiden. Um eine absolute Porenfreiheit zu erreichen wird unter der keramischen Schicht noch eine metallische porenfreie Haftschicht angebracht. Die metallische Haftschicht besteht aus Nickel und Chrom in einer Schichtdicke von 10 bis 70µm. Die mit Keramik beschichtete Oberfläche besitzt Laufeigenschaften, die mit den bekannten Chrom und Nickelchromschichten vergleichbar sind, so daß der Verschleiß niedrig gehalten wird, während aber andererseits die Korrosionsbeständigkeit, die Homogenität der Schichten, die Schmiereigenschaften und insbesondere die Verschleißfestigkeit gegenüber den bekannten Metallschichten wesentlich erhöht werden. Für Kolbenstangen kommen Druchmesser von 25mm bis 1400mm bei maximalen Längen bis zu 12 m in Betracht.

## Patentansprüche

1. Beschichtung von Kolbenstangen hydraulischer Zylinder, dadurch gekennzeichnet, daß auf die Kolbenstangen aus Kohlenstoffstahl eine metallische Haftschicht aus Nickel und Chrom und auf diese eine keramische Schicht aus Al₂O₃ mit einem Anteil von mindestens 10 % TiO₂ aufgebracht ist.

2. Beschichtung nach Anspruch 1, dadurch gekennzeichnet, daß die Schichtdicke der keramischen Schicht 100 - 300 µm beträgt.

3. Beschichtung nach Anspruch 1 oder 2, dadurch gekennzeichnet, daß die Schichtdicke der metallischen Haftschicht 10 - 70 µm beträgt.

## Claims

1. A coating applied to piston rods of hydraulic cylinders, characterized by applying a metallic bonding layer consisting of nickel and chrome to said piston rods made of carbon steel and applying a ceramic layer consisting of Al₂O₃ including a portion of at least 10% TiO₂ to said metallic bonding layer.

2. The layer of claim 1, characterized in that the thickness of the ceramic layer is between 100 to 300µm.

3. The coating of claim 1 or 2 characterized in that the thickness of the metallic layer is between 10 to 70µm.

## Revendications

1. Revêtement de tiges de pistons de cylindres hydrauliques, caractérisé en ce qu'une couche d'adhérence métallique constituée de nickel et de chrome est appliquée sur les tiges de pistons en acier au carbone, et une couche céramique constituée d'Al2O3 avec une proportion d'au moins 10% de TiO2 est appliquée sur cette couche d'adhérence.

2. Revêtement selon la revendication 1, caractérisé en ce que l'épaisseur de la couche céramique est de 100 à 300 µm.

3. Revêtement selon la revendication 1 ou 2, caractérisé en ce que l'épaisseur de la couche d'adhérence métallique est de 10 à 70 µm
